# EUROPÄISCHE PATENTSCHRIFT

(11) **EP 4 151 463 B1**
(45) Veröffentlichungstag und Bekanntmachung des Hinweises auf die Patenterteilung: **12.06.2024**
(21) Anmeldenummer: 22180002.2
(22) Anmeldetag: 20.06.2022
(51) Int. Cl.: B60N 2/75

(54) **BEDIENARBEITSPLATZ FÜR EINE BAUMASCHINE UND BAUMASCHINE**
WORK STATION FOR CONSTRUCTION MACHINE AND CONSTRUCTION MACHINE
POSTE DE TRAVAIL OPÉRATEUR POUR UNE MACHINE DE CONSTRUCTION ET MACHINE DE CONSTRUCTION

(30) Priorität: 15.09.2021 DE 102021123916
(43) Veröffentlichungstag der Anmeldung: 22.03.2023
(73) Patentinhaber: BOMAG GmbH, 56154 Boppard (DE)
(72) Erfinder: Anheier, Thorsten, 56154 Boppard (DE); Haubrich, Thomas, 56154 Boppard (DE); Klein, Thomas, 56154 Boppard (DE)
(74) Vertreter: Zimmermann & Partner Patentanwälte mbB

(56) Entgegenhaltungen:
- EP-A1- 0 054 948
- EP-A2- 1 839 934
- DE-A1-102010 013 041

## Beschreibung

Die Erfindung betrifft einen Bedienarbeitsplatz für eine Baumaschine. Darüber hinaus betrifft die Erfindung eine Baumaschine, insbesondere Bodenverdichtungsmaschine, beispielsweise Straßenwalze oder Walzenzug, oder Straßenfertiger, mit einem derartigen Bedienarbeitsplatz.

Gattungsgemäße Baumaschinen werden beispielsweise im Straßen- und Wegebau sowie beim Bau von Plätzen und Start- und Landebahnen eingesetzt. Es handelt sich insbesondere um Bodenverdichtungsmaschinen wie Straßenwalzen, knick- oder schemelgelenkte Tandemwalzen, Gummiradwalzen oder Walzenzüge. Derartige Baumaschinen werden zum Verdichten von Böden oder Straßenbelägen, beispielsweise Asphaltschichten, eingesetzt. Sie umfassen eine oder mehrere Walzenbandagen und/oder Räder, mit denen sie über einen Untergrund geführt werden und diesen im Wesentlichen aufgrund ihres Eigengewichtes verdichten. Darüber hinaus können Walzenbandagen in bekannter Weise in Schwingungen, beispielsweise Vibrations- oder Oszillationsschwingungen, versetzt werden, um die Verdichtungswirkung zu verbessern. Darüber hinaus handelt es sich bei gattungsgemäßen Baumaschinen beispielsweise auch um Straßenfertiger, die dazu eingesetzt werden, ein Einbaumaterial, beispielsweise Asphalt, flächig in vorgegebener Schichtdicke über einen Untergrund zu verteilen und zumindest teilweise zu verdichten.

Allen gattungsgemäßen Baumaschinen ist gemein, dass sie im Arbeitsbetrieb besonders präzise gesteuert werden müssen, beispielsweise, um möglichst genau an Rändern von zu verdichtenden oder zu verlegenden Schichten entlang zu arbeiten. Um auch bei möglichst präziser Steuerung der Baumaschine über längere Zeit hinweg eine möglichst angenehme und ergonomische Bedienhaltung des Fahrers beziehungsweise Bedieners aufrechterhalten zu können, weisen diese entsprechend ausgestaltete Bedienarbeitsplätze auf. Diese umfassen typischerweise einen Fahrersitz mit einer Sitzfläche, auf der der Fahrer im Betrieb der Baumaschine sitzt, und eine neben der Sitzfläche angeordnete Armlehne mit einer Armauflagefläche. Die Armauflagefläche ist dazu ausgebildet, einen Arm, insbesondere Unterarm, des Fahrers in einer sitzenden Haltung zu stützen. Es versteht sich von selbst, dass derartige Armauflageflächen beidseitig der Sitzfläche vorgesehen sein können. Darüber hinaus ist es bekannt, an den Armlehnen Bedienelemente für verschiedene Maschinenfunktionen der Baumaschine anzuordnen. Diese können derart an der Armlehne angeordnet sein, dass der Bediener sie bequem mit auf der Armauflagefläche aufliegendem Arm bedienen kann. Ein derartiger, gattungsgemäßer Bedienarbeitsplatz ist beispielsweise aus der DE 10 2010 013 041 A1 der Anmelderin bekannt, wobei die Bedienelemente hier beispielsweise einen Steuerhebel in Form eines Joysticks umfassen. Auch ist es bekannt, die Armlehne mit einem Steuerrad zur Steuerung wenigstens einer Maschinenfunktion auszustatten. Das Steuerrad kann beispielsweise um eine Steuerachse drehbar ausgebildet sein und insbesondere als Lenkrad fungieren. Derartige Bedienarbeitsplätze, bei denen die Armlehne ein Steuerrad aufweist, werden beispielsweise in schemelgelenkten Tandemwalzen der Anmelderin mit den Bezeichnungen BW 154 und BW 174 eingesetzt. Diese Systeme erlauben bereits ein sehr präzises und vergleichsweise angenehmes Steuern der Maschinen. Aus der EP 0 054 948 A1 ist ein Fahrerstand für einen Schlepper bekannt, der ein mittig zu einer Sitzfläche angeordnetes Lenkrad aufweist, welches axial verstellbar und nach oben und nach unten verschwenkbar ist. Die EP 1 839 934 A2 offenbart einen Sitz für einen Fahrzeugführer einer Baumaschine mit einem Lenkrad, das an einer um eine horizontale Schwenkachse schwenkbaren Konsole angeordnet ist. Das Lenkrad kann um die horizontale Schwenkachse verschwenkt und entlang der horizontalten Schwenkachse axial verschoben werden

Bei den bekannten Bedienarbeitsplätzen sind die an der Armlehne angeordneten Steuerräder allerdings derart ausgerichtet, dass ihre Radebene beziehungsweise Drehebene entweder horizontal angeordnet oder nach vorne von der Sitzfläche weg und zur Sitzmitte hin verkippt ist. Die Radebene beziehungsweise Drehebene bezeichnet vorliegend diejenige Ebene, in der die Kreisbahn liegt, die ein Punkt auf dem Steuerrad beschreibt, während das Steuerrad um die Steuerachse gedreht wird. Die Steuerachse wiederum ist eine virtuelle Achse senkrecht zur Radebene, die durch den Mittelpunkt der Kreisbahn verläuft. Im Stand der Technik ist diese Radebene entweder parallel zu einer Horizontalebene, wobei die Horizontalebene vorliegend eine Ebene parallel zu einer planen Aufstandsfläche der Baumaschine beschreibt. In dieser Anordnung ist die Steuerachse parallel zu einer senkrecht auf der Horizontalebene stehenden Vertikalen. Oder die Radebene ist von der Armauflagefläche der Armlehne - und damit auch vom auf dem Fahrersitz sitzenden Fahrer - weg, sprich, nach vorne, geneigt. Zusätzlich kann die Radebene ebenfalls hierzu senkrecht in einer Richtung auf die Sitzmitte zu geneigt sein. Diese Anordnung der Radebene wurde gewählt, um möglichst der entspannten Lage des auf der Armauflagefläche liegenden Arms des Fahrers und dessen Handgelenks zu folgen. Es hat sich nun allerdings gezeigt, dass diese Anordnung des Steuerrads insbesondere während Drehbewegungen des Steuerrades für den Fahrer unangenehm sein kann, da die Ruheposition des Handgelenkes nicht optimal für die repetitiven Lenkbewegungen am Steuerrad ist. Darüber hinaus hat sich gezeigt, dass die entsprechende Neigung des Steuerrades teilweise unintuitiv für den Fahrer sein kann, der sich dadurch in der notwendigen Lenkrichtung irrt, wozu es zu Fehlbedienungen der Baumaschine kommen kann.

Es ist daher die Aufgabe der vorliegenden Erfindung, einen Bedienarbeitsplatz für eine Baumaschine und eine Baumaschine mit einem derartigen Bedienarbeitsplatz anzugeben, bei denen die Steuerung verbessert beziehungsweise erleichtert wird. Insbesondere soll die Ergonomie für den Fahrer verbessert und Fehlbedienungen reduziert werden.

Die Lösung der Aufgabe gelingt mit einem Bedienarbeitsplatz und einer Baumaschine gemäß den unabhängigen Ansprüchen. Bevorzugte Weiterbildungen sind in den abhängigen Ansprüchen angegeben.

Konkret gelingt die Lösung bei einem eingangs genannten, gattungsgemäßen Bedienarbeitsplatz für eine Baumaschine dadurch, dass die Steuerachse des Steuerrads gegenüber einer Vertikalen um einen Kippwinkel in Richtung auf die Armauflagefläche der Armlehne zu verkippt angeordnet ist. Die Vertikale beschreibt eine Richtung senkrecht zur vorstehend bereits erläuterten Horizontalebene. Insbesondere ist derjenige Abschnitt der Steuerachse des Steuerrades auf die Armauflagefläche der Armlehne zu verkippt, der in Vertikalrichtung über dem Steuerrad beziehungsweise über der Radebene liegt. Die Armauflagefläche der Armlehne befindet sich insbesondere am hinteren Ende der Armlehne im Bereich einer Rückenlehne, während das Steuerrad sich insbesondere am vorderen Ende der Armlehne befindet. Die Armauflagefläche bezeichnet somit auch denjenigen Bereich der Armlehne, auf dem der Arm, insbesondere Unterarm, des im Fahrersitz sitzenden Bedieners tatsächlich im Bedienfall des Steuerrades aufliegt. Für einen auf dem Fahrersitz sitzenden Fahrer ist die Steuerachse des Steuerrades in Vertikalrichtung nach oben gesehen und damit ebenfalls die Radebene also nach hinten beziehungsweise auf den Fahrer zu geneigt. Richtungsangaben wie "hinten", "vorne" und "seitlich" beziehen sich vorliegend auf das Verständnis eines mit geradeaus gerichtetem Blick auf dem Sitz beziehungsweise auf der Sitzfläche sitzenden Fahrers. Die Richtungsangaben sind daher auch unabhängig von einer eventuellen Dreh- oder Schwenkbarkeit des Fahrersitzes innerhalb des Fahrstandes. Bei entsprechenden Bewegungen des Fahrersitzes bewegt sich der auf dem Sitz sitzende Fahrer als Bezugspunkt mit, sodass auch die Richtungsangaben weiterhin gelten. Im Stand der Technik ist die Radebene von der Armauflagefläche weg nach vorne geneigt. Im Gegensatz hierzu geht die Erfindung nun gerade den entgegengesetzten Weg, da die Radebene erfindungsgemäß nach hinten, insbesondere auf die Armauflagefläche zu, geneigt angeordnet ist. Der erfindungsgemäße Kippwinkel zwischen der Steuerachse und der Vertikalen findet sich dabei ebenfalls zwischen der Radebene und der Horizontalebene. Durch die erfindungsgemäße Anordnung des Steuerrads wird zum einen eine ergonomische Haltung des Armes und ebenfalls des Handgelenkes des Fahrers bei der Bedienung des Steuerrades erreicht. Beispielsweise muss das Handgelenk einen geringeren Bewegungswinkel für die Lenkbewegung ausführen. Auf diese Weise kann der Fahrer auf dem erfindungsgemäßen Bedienarbeitsplatz auch über lange Zeit hinweg entspannt und ohne negative Beeinträchtigung seiner Gesundheit arbeiten. Gleichzeitig ähnelt die Stellung des Steuerrads bei der Erfindung deutlich mehr derjenigen eines Lenkrads eines PKWs. Die Nutzung des Steuerrades ist daher besonders intuitiv, wodurch Bedienungsfehler durch den Fahrer reduziert werden. Wenn vorliegend die Position und/oder die Ausrichtung des Steuerrads und/oder der Radebene und/oder der Steuerachse beschrieben wird, dann bezieht sich dies auf eine aktive Arbeitsposition des Steuerrads. Dies bedeutet, dass das Steuerrad in der beschriebenen Position und/oder Ausrichtung auch tatsächlich einsatzbereit ist und zur Aufnahme beziehungsweise Erzeugung von Steuerbefehlen genutzt werden kann. Es kann beispielsweise sein, dass das Steuerrad, gegebenenfalls auch mit Teilen der Armlehne, aus der Arbeitsposition in eine Stauposition verschwenkt werden kann, beispielsweise um die Bewegung eines Bedieners in der Fahrerkabine zu erleichtern. Auf eine derartige Position, in der das Steuerrad nicht einsatzbereit ist, bezieht sich die vorliegende Erfindung explizit nicht.

Die über das Steuerrad gesteuerte wenigstens eine Maschinenfunktion kann beispielsweise die Lenkung der Baumaschine sein. Darüber hinaus kann das Steuerrad allerdings zumindest teilweise auch für andere Maschinenfunktionen genutzt werden. Beispielsweise könnte dem Steuerrad von einer Steuereinrichtung der Baumaschine, beispielsweise deren Bordcomputer, eine andere Maschinenfunktionen zugewiesen werden, beispielsweise die Steuerung einer Arbeitseinrichtung der Baumaschine. Darüber hinaus könnte das Steuerrad auch genutzt werden, um beispielsweise Parameter verschiedener Maschinenfunktionen zu verstellen, wobei beispielsweise eine Drehung in eine Richtung eine Erhöhung und eine Drehung in die andere Richtung eine Verringerung des jeweiligen Parameters darstellt. Grundsätzlich können dem Steuerrad beliebige Maschinenfunktionen zugewiesen werden.

Der erfindungsgemäße Kippwinkel, also der Winkel zwischen der Steuerachse und der Vertikalen beziehungsweise zwischen der Radebene und einer Horizontalebene beträgt bevorzugt zwischen 20° und 70°. Besonders bevorzugt beträgt der Winkel zwischen 30° und 60°, insbesondere zwischen 40° und 50°. Eine konkrete, bevorzugte Ausführung sieht einen Winkel von 45° vor. Der entsprechende Winkel beziehungsweise die Winkelbereiche haben sich als besonders ergonomisch herausgestellt.

Grundsätzlich kann das Steuerrad mit einem festen Kippwinkel an der Armlehne angeordnet sein. Mit anderen Worten kann das Steuerrad derart an der Armlehne angeordnet sein, dass der Kippwinkel fest vorgegeben ist und im Betrieb des Bedienarbeitsplatzes beziehungsweise der Baumaschine gleich bleibt. Gemäß einer bevorzugten Ausführungsform ist es nun allerdings vorgesehen, dass der Kippwinkel durch den Fahrer beziehungsweise Bediener verstellbar ausgebildet ist. Insbesondere ist das Steuerrad derart schwenkbar an der Armlehne angeordnet, dass der Kippwinkel von einem Bediener frei wählbar ist, insbesondere in einem Bereich von 20° bis 70° oder den bereits vorstehend genannten Winkelbereichen. Darüber hinaus ist das Steuerrad in verschiedenen Schwenkpositionen arretierbar, wozu bevorzugt eine Feststelleinrichtung, beispielsweise eine Rast- und/oder Klemmvorrichtung, vorgesehen ist. Das Steuerrad kann daher in einer vom Bediener gewählten Winkelstellung an der Armlehne festgestellt werden. Auf diese Weise kann der Bediener einen Kippwinkel wählen beziehungsweise einstellen, der für ihn besonders angenehm oder für eine konkrete Arbeitssituation vorteilhaft ist.

Die Orientierung des Steuerrades mit dem erfindungsgemäßen Kippwinkel führt bereits zu wesentlichen Verbesserungen der Ergonomie und zu einer intuitiven Bedienweise. Um den erfindungsgemä-βen Bedienarbeitsplatz noch flexibler zu gestalten, ist in einer bevorzugten Ausführungsform der Erfindung vorgesehen, dass das Steuerrad um einen senkrecht zum Kippwinkel orientierten Neigungswinkel gegenüber der Vertikalen geneigt an der Armlehne angeordnet ist, insbesondere in einem Bereich von bis zu 60°. Insbesondere ist die Steuerachse des Steuerrads um den Neigungswinkel gegenüber der Vertikalen auf den auf der Sitzfläche des Fahrersitzes sitzenden Fahrer zu beziehungsweise zur Sitzmitte hin geneigt. Auch hier betreffen die Erläuterungen denjenigen Abschnitt der Steuerachse, der in Vertikalrichtung über dem Steuerrad beziehungsweise der Radebene liegt. Das Steuerrad ist mit anderen Worten zusätzlich zur Neigung um den Kippwinkel um den Neigungswinkel geneigt, wobei die Neigung um den Neigungswinkel senkrecht zum Kippwinkel verläuft. Insbesondere ist die Steuerachse des Steuerrads gegenüber der Vertikalen und damit auch die Radebene des Steuerrads gegenüber der Horizontalebene aus Sicht des Fahrers gesehen seitlich auf den Fahrer beziehungsweise die Sitzmitte zu geneigt. Das Steuerrad ist damit insgesamt schräg auf den auf der Sitzfläche sitzenden Fahrer zu geneigt. Eine derartige Orientierung ist für den Fahrer besonders intuitiv zu bedienen.

Wie bereits vorstehend für den Kippwinkel erläutert, kann auch der Neigungswinkel fest vorgegeben seien. Das Steuerrad kann also derart an der anderen Armlehne angeordnet sein, dass der Neigungswinkel fest vorgegeben ist und im Betrieb des Bedienarbeitsplatzes beziehungsweise der Baumaschine gleich bleibt. Gemäß einer weiteren bevorzugten Ausführungsform ist es nun allerdings vorgesehen, dass der Neigungswinkel durch den Fahrer beziehungsweise Bediener verstellbar ausgebildet ist. Hierfür ist das Steuerrad derart schwenkbar und in verschiedenen Schwenkpositionen arretierbar an der Armlehne angeordnet, dass der Neigungswinkel von einem Bediener frei wählbar ist, insbesondere in einem Bereich von 0° bis 60°, bevorzugt von 0° bis 45°. Zum Feststellen des Steuerrades in einem gewünschten Neigungswinkel ist wiederum bevorzugt eine Feststelleinrichtung, beispielsweise eine Rast-und/oder Klemmvorrichtung, vorgesehen. Durch die zusätzliche Verstellung der Orientierung des Steuerrades über den senkrecht zum Kippwinkel verlaufenden Neigungswinkel wird eine maximale Flexibilität für den Bediener geschaffen. Dieser kann seinen Bedienarbeitsplatz nach Wunsch und persönlichen Vorlieben konfigurieren.

Um für den Bediener eine möglichst bequeme Position bei der Betätigung des Steuerrades zu ermöglichen, ist es wichtig, dass das Steuerrad gegenüber der Sitzfläche des Fahrersitzes in einer angenehmen Entfernung positioniert ist. Insbesondere ist das Steuerrad bezüglich der Sitzfläche seitlich versetzt angeordnet. Das Steuerrad ist dazu erfindungsgemäß in einer Horizontalebene quer zu einer Vorwärtsrichtung beziehungsweise vorne/hinten-Richtung von der Sitzfläche beabstandet beziehungsweise entfernt angeordnet, fluchtet insbesondere nicht in vorne/hinten-Richtung mit der Sitzfläche. Als Referenz für den Abstand kann beispielsweise die Breite der Sitzfläche herangezogen werden. Die Breite der Sitzfläche ist die seitliche Erstreckung der Sitzfläche in einer horizontalen Bezugsebene in der vorstehend bereits erläuterten Referenz zum sitzenden Fahrer. Die Breite der Sitzfläche ist insbesondere daher quer zu einer vorne/hinten-Richtung und beispielweise senkrecht zur Längserstreckung Erstreckung der Armlehne angeordnet. Die Breite der Sitzfläche beträgt beispielsweise 48 cm bis 50 cm. Als Referenzpunkt am Steuerrad wiederum wird vorliegend der Schnittpunkt der Radebene des Steuerrads mit der Steuerachse herangezogen. Insgesamt ist es bevorzugt vorgesehen, dass der Schnittpunkt der Radebene des Steuerrades mit der Steuerachse um wenigstens 15 %, bevorzugt wenigstens 30 % oder wenigstens 50 %, der Breite der Sitzfläche von der Sitzfläche entfernt angeordnet ist. Ein besonders bevorzugter Wert ist 18,5 %. Alternativ kann als Referenz für den Abstand auch die Mitte der Breite der Sitzfläche oder der Sitzindexpunkt herangezogen werden. Der Sitzindexpunkt ist insbesondere nach DIN EN ISO 5353 zu bestimmen und liegt ebenfalls in der Mitte der Breite der Sitzfläche. Die Mitte der Breite der Sitzfläche liegt in derjenigen Vertikalebene, die in einer vorne/hinten-Richtung verläuft und die Sitzfläche halbiert. Der Abstand des Schnittpunktes zur Sitzfläche, zur Mitte der Breite der Sitzfläche oder zum Sitzindexpunkt wird dabei insbesondere parallel zu derjenigen Richtung gemessen, in der die Breite der Sitzfläche bestimmt wird. Mit anderen Worten wird der Abstand des Schnittpunktes zur Sitzfläche, zur Mitte der Breite der Sitzfläche oder zum Sitzindexpunkt senkrecht zu einer vorne/hinten-Richtung und senkrecht zur Erstreckung der Armlehne gemessen. In konkreten Zahlen beträgt der Abstand, insbesondere unabhängig von der jeweiligen Referenz, beispielsweise mindestens 5 cm, bevorzugt mindestens 8 cm oder mindestens 12 cm oder mindestens 16 cm oder mindestens 20 cm oder mindestens 25 cm oder mindestens 30 cm. Ein konkretes Beispiel wäre ein Abstand von 8,5 cm bis 9,5 cm, beispielsweise 9 cm, bezogen auf die Sitzfläche, und 32 cm bis 35 cm, beispielsweise 33,5 cm, bezogen auf die Mitte der Breite der Sitzfläche oder den Sitzindexpunkt. Die Armlehne kann grundsätzlich ebenfalls schwenkbar am Fahrersitz angeordnet sein. Insbesondere kann die Armlehne um eine Vertikalschwenkachse an ihrem hinteren Ende schwenkbar sein. Durch ein entsprechendes Verschwenken der Armlehne wird selbstverständlich auch der vorstehend beschriebene Abstand verändert. Die jeweiligen Angaben beziehen sich daher insbesondere entweder auf eine nicht schwenkbare Armlehne oder auf eine schwenkbare Armlehne, die sich in einer mittleren beziehungsweise gerade nach vorne orientierten Position befindet.

Darüber hinaus ist es für eine ergonomische Bedienung des Steuerrades durch den Bediener wichtig, dass das Steuerrad bequem zugänglich ist, während der Arm des Bedieners auf der Armauflagefläche der Armlehne liegt. Es ist daher bevorzugt, dass der Schnittpunkt der Radebene des Steuerrades mit der Steuerachse in Vertikalrichtung, sprich, entlang der Vertikalen, im Wesentlichen auf der Höhe der Armauflagefläche der Armlehne angeordnet ist. Die Armauflagefläche muss hierfür nicht parallel zu einer Horizontalebene geformt sein. Beispielsweise kann die Armauflagefläche auch muldenförmig sein, um den Arm des Bedieners von verschiedenen Seiten zu stützen. Als die vertikale Höhe der Armauflagefläche wird vorliegend diejenige Position in Vertikalrichtung angesehen, auf der der vertikal unterste Teil des auf der Armauflagefläche aufliegenden Arms des Bedieners angeordnet ist. Die Höhe der Armauflagefläche in Vertikalrichtung ist also die Höhe der in Vertikalrichtung untersten Stelle der Armauflagefläche, die noch mit dem Arm des Bedieners in Kontakt kommt, wenn der Arm des Bedieners auf der Armauflagefläche aufliegt. Diese soll im Wesentlichen auf Höhe des Schnittpunktes der Radebene mit der Steuerachse angeordnet sein. Mit anderen Worten ist es bevorzugt, dass der Schnittpunkt der Radebene des Steuerrads mit der Steuerachse in Vertikalrichtung in einem Bereich von +/- 3 cm, bevorzugt +/- 2 cm oder +/- 1 cm um die Höhe der Armauflage angeordnet ist. Ein besonders bevorzugter Wert ist 1,3 cm. Besonders bevorzugt ist es, wenn der Schnittpunkt in Vertikalrichtung auf Höhe, also genau auf Höhe, der Armauflagefläche angeordnet ist.

Zur bequemen Bedienung des Steuerrades mit auf der Armauflagefläche aufliegenden Arm ist es ebenfalls wichtig, dass das Steuerrad keinen zu großen Durchmesser aufweist. Es ist daher bevorzugt vorgesehen, dass das Steuerrad einen Durchmesser aufweist, der im Wesentlichen der Breite der Armauflagefläche entspricht. Die Breite der Armauflagefläche wird parallel zur Breite der Sitzfläche gemessen. Mit anderen Worten verläuft die Breite der Armauflagefläche senkrecht zu einer vorne/hinten-Richtung und insbesondere auch quer zu einem auf der Armauflagefläche liegenden Arm eines Benutzers. Ist bevorzugt vorgesehen, dass das Steuerrad einen Durchmesser aufweist, der mit einer maximalen Abweichung von +/- 10%, und insbesondere genau, der Breite der Armauflagefläche entspricht. In konkreten Zahlen ausgedrückt ist der Durchmesser des Steuerrades bevorzugt kleiner als 40 cm, besonders bevorzugt kleiner als 35 cm oder kleiner als 30 cm oder kleiner als 25 cm oder kleiner als 20 cm oder kleiner als 15 cm. Der Durchmesser beträgt beispielsweise 14 cm.

Die Armlehne des Fahrersitzes erstreckt sich neben, insbesondere seitlich neben, der Sitzfläche. Sie weist insbesondere einen die Armauflagefläche tragenden Armauflagebereich auf, der vom Fahrer aus gesehen das hintere Ende der Armlehne bildet. Darüber hinaus weist sie insbesondere einen das Steuerrad tragenden Lagerbereich auf, der vom Fahrer aus gesehen das vordere Ende der Armlehne bildet. Schließlich umfasst die Armlehne ebenfalls einen den Armauflagebereich mit dem Lagerbereich verbindenden Konsolenbereich, der zwischen den beiden anderen Bereichen angeordnet ist. Der Konsolenbereich weist von allen drei Bereichen in Vertikalrichtung insbesondere die geringste Erstreckung nach oben auf, so dass die drei Bereiche in Seitenansicht insbesondere eine U-Form bilden. Es ist nun hierzu bevorzugt vorgesehen, dass der Lagerbereich sich schräg von der Armauflagefläche und/oder dem Konsolenbereich weg, sprich nach vorne, und vertikal nach oben erstreckt. Weiter bevorzugt ist der Lagerbereich, insbesondere dort, wo er das Steuerrad lagert, parallel zur Radebene des Steuerrades angeordnet. Ganz besonders bevorzugt wird auf vertikaler Höhe des Konsolenbereichs der Armlehne im Lagerbereich ein Freiraum gebildet. Mit anderen Worten ist in Vertikalrichtung unter dem Lagerbereich ein Freiraum angeordnet, der eine erhöhte Beinfreiheit für den Bediener auch zu den Seiten der Sitzfläche vorne bietet.

Weitere Bewegungsfreiheit für den Fahrer, insbesondere Beinfreiheit, wird durch eine Seitenausnehmung erreicht. In einer bevorzugten Ausführungsform weist die Armlehne also eine Seitenausnehmung auf, in der die Armlehne zwischen der Armauflagefläche und dem Steuerrad in der Horizontalebene in Richtung von der Sitzfläche weg, sprich, nach außen, zurückspringend ausgebildet ist. Die Seitenausnehmung selbst ist also dem Sitzmittelpunkt und damit dem auf dem Sitz sitzenden Fahrer zugewandt. Die Seitenausnehmung befindet sich im Konsolenbereich und/oder im Lagerbereich der Armlehne. Bevorzugt erstreckt sich die Seitenausnehmung in vorne/hinten-Richtung entlang der Armlehne wenigstens bis zum Steuerrad. Auch quer zur vorne/hinten-Richtung erstreckt sich die Seitenausnehmung bevorzugt bis zum Steuerrad und insbesondere zum Schnittpunkt der Radebene des Steuerrads mit der Steuerachse. Insbesondere erstreckt sich die Seitenausnehmung in Richtung von der Armauflagefläche weg sprich, nach vorne, bis über eine Vorderkante der Sitzfläche hinaus. Die Vorderkante der Sitzfläche beschreibt insbesondere das vordere Ende der Sitzfläche. Die Vorderkante der Sitzfläche beschreibt insbesondere dasjenige Ende, welches den Knien eines auf dem Fahrersitz sitzenden Bedieners am nächsten ist. Die Außenkontur der Armlehne ist also von oben gesehen im Bereich der Seitenausnehmung seitlich zu rückspringend und sich nach vorne in zurückgesprungener Position erstreckend ausgebildet.

Gemäß einer bevorzugten Ausführungsform ist vorgesehen, dass das Steuerrad eine Bedienhilfe aufweist, die es insbesondere erleichtert, das Steuerrad zu greifen. Hierfür ist es beispielsweise vorgesehen, dass das Steuerrad einen, insbesondere rotierbar am Steuerrad angeordneten, Griffknauf aufweist. Der Griffknauf ist insbesondere gegenüber dem Steuerrad drehbar gelagert, sodass er von einem Bediener ergriffen und über ihn das Steuerrad gedreht werden kann, ohne dabei den Griff am Griffknauf verändern zu müssen. Ergänzend oder alternativ kann auch eine, insbesondere halbmondförmige, Ausnehmung am Steuerrad vorgesehen sein, insbesondere eine Ausnehmung an der äußeren Umfangsfläche des Steuerrads. Diese stellt den radial von der Steuerachse entferntesten Teil des Steuerrades dar. Die Ausnehmung kann beispielsweise eine Mulde oder eine Nut sein. Der Außenumfang des Steuerrads ist in diesem Fall also nicht umlaufend geschlossen kreisförmig, sondern weist durch die Ausnehmung einen übergangsweisen Rücksprung auf. Im Betrieb kann ein Bediener einen oder mehrere Finger in die Ausnehmung legen und das Steuerrad dadurch leichter bedienen.

Um weitere Maschinenfunktionen über die Armlehne steuern zu können, ist es bevorzugt, dass zwischen dem Steuerrad und der Armauflagefläche eine Bedienkonsole mit wenigstens einem Bedienelement zur Steuerung wenigstens einer Maschinenfunktion an der Armlehne angeordnet ist. Die Bedienkonsole ist insbesondere im Konsolenbereich der Armlehne angeordnet. Bei der zu steuernden Maschinenfunktionen kann es sich um die gleiche oder eine andere Maschinenfunktion handeln, die ebenfalls über das Steuerrad steuerbar sein kann. Die weiteren Bedienelemente der Bedienkonsole können beispielsweise Schalter, Drehknöpfe, Schieber oder ähnliches sein. Sie sind insbesondere in Vertikalrichtung unter der Armauflagefläche und damit auch unter dem Schnittpunkt der Steuerachse und der Radebene angeordnet. Auf diese Weise sind sie vom auf der Armauflagefläche aufliegenden Arm des Bedieners beabstandet und es besteht nicht die Gefahr, dass die Bedienelemente aus Versehen betätigt werden.

Die Lösung der eingangs genannten Aufgabe gelingt ebenfalls mit einer Baumaschine, insbesondere einer Bodenverdichtungsmaschine, beispielsweise Straßenwalze oder Walzenzug, oder Straßenfertiger, mit einem Bedienarbeitsplatz gemäß den vorhergehenden Erläuterungen. Sämtliche zum erfindungsgemäßen Bedienarbeitsplatz gemachten Erläuterungen, Merkmale, Vorteile und Wirkungen gelten im übertragenen Sinne ebenfalls für die erfindungsgemäße Baumaschine und umgekehrt. Es wird lediglich zur Vermeidung von Wiederholungen auf die jeweils anderen Erläuterungen Bezug genommen.

Die Erfindung wird nachstehend anhand der in den Figuren gezeigten Ausführungsbeispiele näher erläutert. Es zeigen schematisch:
- Figur 1:: eine Seitenansicht einer Tandemwalze;
- Figur 2:: eine Seitenansicht eines Walzenzuges;
- Figur 3:: eine Seitenansicht eines Straßenfertigers;
- Figur 4:: eine Seitenansicht eines Bedienarbeitsplatzes;
- Figur 5:: eine Draufsicht eines Bedienarbeitsplatzes;
- Figur 6:: eine Seitenansicht einer Armlehne; und
- Figur 7:: eine perspektivische Ansicht einer Armlehne.

Gleiche beziehungsweise gleich wirkende Bauteile sind mit den gleichen Bezugszeichen beziffert. Sich wiederholende Bauteile sind nicht in jeder Figur gesondert bezeichnet.

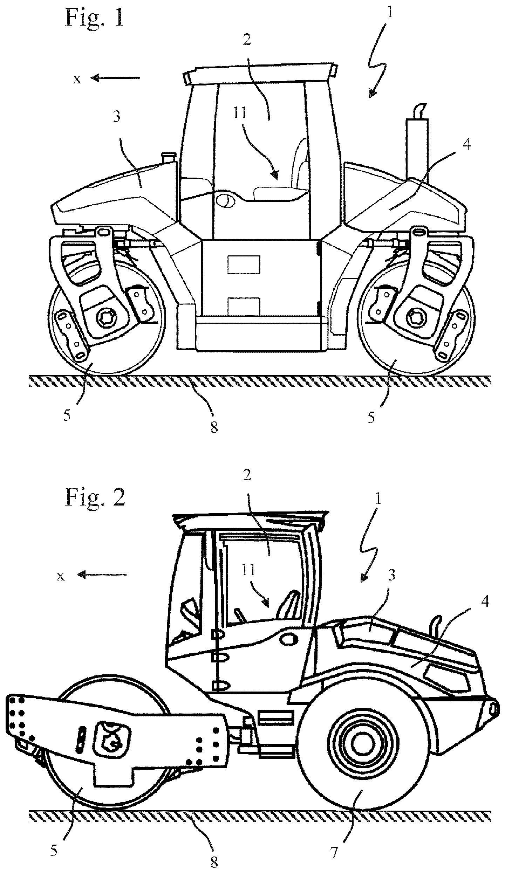

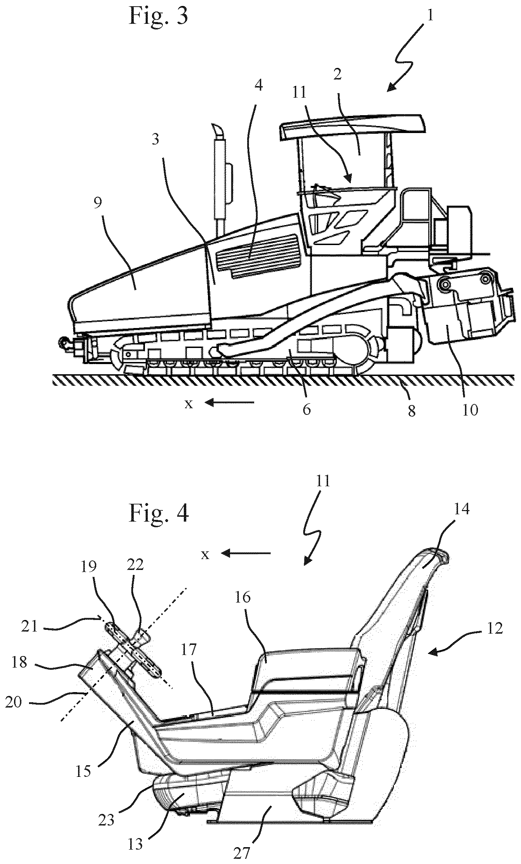

Die Figuren 1-3 zeigen unterschiedliche Beispiele gattungsgemäßer Baumaschinen 1. Insbesondere zeigt Figur 1 eine schemelgelenkte Tandemwalze, Figur 2 eine Walzenzug und Figur 3 einen Straßenfertiger. Die Erfindung ist allerdings nicht auf die drei gezeigten Typen von Baumaschinen 1 beschränkt, sondern kann auch auf andere Arten von Baumaschinen 1 übertragen werden. Die Baumaschinen 1 umfassen beispielsweise einen Fahrerstand 2, der insbesondere von einem Maschinenrahmen 3 getragen wird. Der Maschinenrahmen 3 wiederum wird bevorzugt von einem Fahrwerk getragen, welches beispielsweise im Falle der Tandemwalze gemäß Figur 1 zwei Walzenbandagen 5 umfassen kann. Das Fahrwerk des Walzenzuges gemäß Figur 2 wiederum umfasst bevorzugt eine vordere Walzenbandage 5 und hintere Räder 7, während das Fahrwerk des Straßenfertigers gemäß Figur 3 bevorzugt ein Kettenlaufwerk 6 umfasst. Darüber hinaus weisen die Baumaschinen 1 bevorzugt einen Antriebsmotor 4 auf, der beispielsweise ein Verbrennungsmotor, insbesondere Dieselmotor, oder ein Elektromotor sein kann. Die Baumaschinen 1 sind somit bevorzugt selbstfahrend ausgebildet und bewegen sich mit einem eigenen Antrieb. Mit ihrem Fahrwerk bewegen sich die Baumaschinen 1 beispielsweise in oder entgegen der Arbeitsrichtung x über den Boden 8, der von den Walzenbandagen 5 verdichtet oder auf dem vom Straßenfertiger eine Einbauschicht verlegt wird. Hierfür können die Walzenbandagen 5 ebenfalls in bekannter Weise in Schwingungen versetzt werden. Für den Einbau einer Schicht weist der Straßenfertiger bevorzugt gemäß Figur 3 in bekannter Weise einen Materialbunker 9 auf, von dem das Einbaugut, beispielsweise Asphalt, durch den Straßenfertiger nach hinten bis zu einer Einbaubohle 10 transportiert wird. Über die Einbaubohle 10 wird das Einbaugut dann quer zu Arbeitsrichtung x verteilt und vorverdichtet.

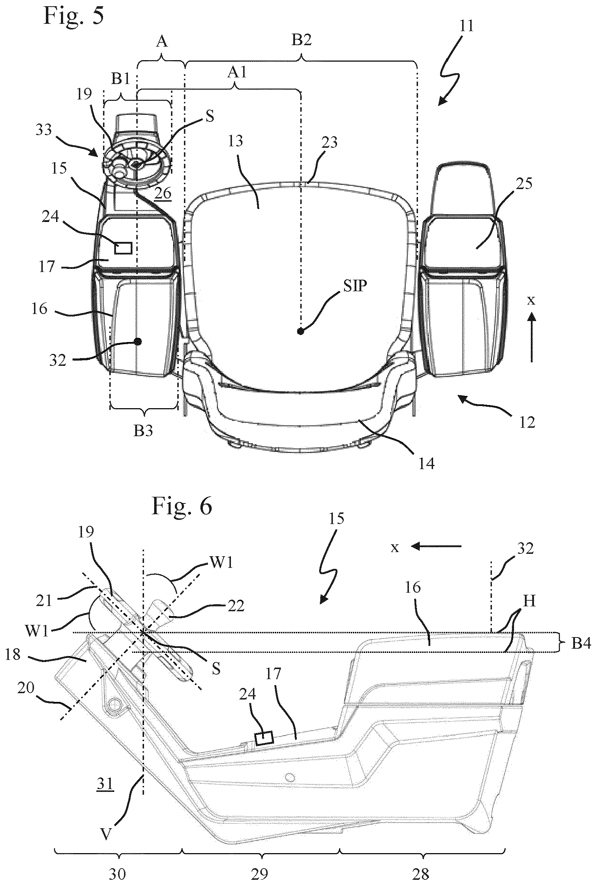

Im Fahrerstand 2 weisen die Baumaschinen 1 bevorzugt jeweils einen Bedienarbeitsplatz 11 auf, der in einer Seitenansicht in Figur 4 und in einer Draufsicht in Figur 5 gezeigt ist. Es kann auch mehr als ein Bedienarbeitsplatz 1 vorgesehen sein. Der Bedienarbeitsplatz 11 umfasst bevorzugt einen Fahrersitz 12, der wiederum eine Sitzfläche 13, gegebenenfalls eine Rückenlehne 14 sowie eine Armlehne 15 umfasst. Die Armlehne 15 ist beispielsweise über eine Lagerkonsole 27 am Fahrersitz 12 beziehungsweise einem Unterbau des Fahrersitzes 12 befestigt. Über einen nicht gezeigten Mechanismus kann die Armlehne 15 in Vertikalrichtung höhenverstellbar ausgebildet sein. Ergänzend oder alternativ kann die Armlehne 15 um eine vertikale Schwenkachse 32 verschwenkbar ausgebildet sein. Die Armlehne 15 trägt ein Steuerrad 19, wie nachstehend noch näher erläutert wird. Wie aus der Draufsicht aus Figur 5 hervorgeht, umfasst der Fahrersitz 12 darüber hinaus bevorzugt eine weitere Armlehne 25, an der ebenfalls verschiedene Bedienelemente angeordnet sein können. Die Armlehne 25 kann dabei gespiegelt aber identisch zur Armlehne 15 oder anders als die Armlehne 15 ausgebildet sein. Über das Steuerrad 19 an der Armlehne 15 kann ein auf dem Fahrersitz 12 und insbesondere der Sitzfläche 13 sitzender Bediener eine Maschinenfunktion steuern. Beispielsweise kann der Bediener die Baumaschine 1 über das Steuerrad 19 lenken, wie über ein konventionelles Lenkrad. Um die Bedienung des Steuerrades 19 zu erleichtern umfasst dieses bevorzugt eine Bedienhilfe, beispielsweise in Form eines drehbar am Steuerrad 19 gelagerten Griffknaufs 22. Ergänzend oder alternativ kann das Steuerrad 19 auch eine Ausnehmung 33 aufweist, die insbesondere an der außenliegenden Oberfläche des Steuerrads 19 angeordnet ist, und in die von einem Bediener eingegriffen werden kann.

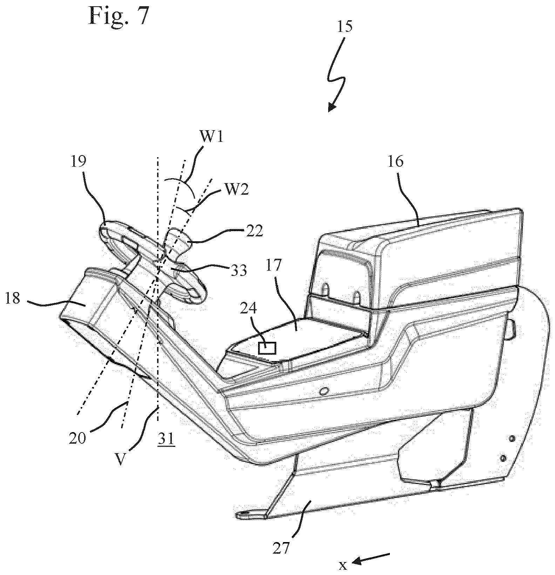

Ein konkreter beispielhafter Aufbau der Armlehne 15 geht am besten aus den Detailansichten der Figuren 6 und 7 hervor. Für die vorliegende Beschreibung wird davon ausgegangen, dass der Fahrersitz 12 in Arbeitsrichtung x geradeaus ausgerichtet ist, sodass die Arbeitsrichtung x ebenfalls einer vorne/hinten-Richtung für einen auf dem Fahrersitz 12 sitzenden Fahrer entspricht. Ist der Fahrersitz 12 um eine vertikale Achse drehbar, dreht sich dann die Bezugsrichtung x mit. Die Armlehne 15 erstreckt sich daher bevorzugt in vorne/hinten-Richtung beziehungsweise in Arbeitsrichtung x neben der Sitzfläche 13 des Fahrersitzes 12. Auf diese Richtung beziehen sich auch alle Angaben dieser Beschreibung zu "vorne", "hinten" und "seitlich", wobei "seitlich" eine Richtung quer zur vorne/hinten-Richtung bezeichnet. Wie in Figur 6 gezeigt, kann die Armlehne 15 beispielsweise drei unterschiedliche Bereiche aufweisen, konkret einen hinten liegenden Armauflagebereich 28, einen nach vorne darauffolgenden Konsolenbereich 29 und einen die Armlehne 15 nach vorne abschließenden Lagerbereich 30. Im Armauflagebereich 28 weist die Armlehne 15 eine Armauflagefläche 16 auf, die dazu ausgebildet ist, dass ein auf der Sitzfläche 13 sitzender Bediener seinen Arm, insbesondere seinen Unterarm, in bequemer Sitzhaltung auf ihr ablegen kann. Hierfür umfasst die Armauflagefläche 16 bevorzugt eine insbesondere im Querschnitt teilweise abgerundete Polsterung auf, um eine Sicherung gegen ein seitliches Abrutschen eines auf der Armauflagefläche 16 aufliegenden Armes zu geben. Die Armauflagefläche 16 kann insbesondere an der Armlehne 15 nach vorne oder nach hinten verschiebbar sein, je nach den Wünschen des Bedieners. Im Konsolenbereich 29 wiederum weist die Armlehne 15 bevorzugt eine Bedienkonsole 17 auf, an der bevorzugt wenigstens ein Bedienelement 24 wie beispielsweise ein Schalter, ein Schieber oder ein Drehknopf angeordnet ist. Über dieses Bedienelement 24 können bevorzugt weitere Maschinenfunktionen vom Bediener gesteuert werden.

Das vordere Ende der Armlehne 15 wird bevorzugt vom Lagerbereich 30 gebildet. Es ist dabei vorteilhaft, wenn der Armauflagebereich 28 und der Lagerbereich 30 den Konsolenbereich 29 in vertikaler Richtung überragen, so dass die Armlehne 15 von der Seite gesehen insgesamt U-förmig ausgebildet ist. Der Lagerbereich 30 umfasst bevorzugt einen Steuerradträger 18, an dem das Steuerrad 19 drehbar gelagert ist. Das Steuerrad 19 weist eine Radebene 21 (Figuren 4 und 6) auf, die der Drehebene des Steuerrades 19 entspricht, und insbesondere eine Steuerachse 20, die der Drehachse des Steuerrades 19 entspricht. Wie insbesondere in Figur 6 gezeigt, ist es erfindungsgemäß vorgesehen, dass die Steuerachse 20 um einen Kippwinkel W1 gegenüber der Vertikalen V geneigt ist, und zwar in Richtung auf die Armauflagefläche 16 zu, wenn der Verlauf der Steuerachse 20 in Vertikalrichtung nach oben gesehen wird. Mit anderen Worten ist die Steuerachse 20 um den Kippwinkel W1 gegenüber der Vertikalen V nach hinten geneigt. Derselbe Kippwinkel W1 findet sich ebenfalls zwischen der Radebene 21 und einer Horizontalebene H. Im gezeigten Ausführungsbeispiel beträgt der Kippwinkel W1 ungefähr 45°, kann allerdings auch andere Werte annehmen. Dadurch verläuft die Drehebene somit in einer in Vorwärtsrichtung x aufsteigenden Ebene. Durch die Anordnung des Steuerrades 19 derart, dass das Steuerrad 19 auf den Bediener zu nach hinten gekippt ist, kann der Bediener das Steuerrad 19 in intuitiver, ergonomischer Weise mit einem auf der Armauflagefläche 16 aufliegenden Arm steuern, und dies auch über längere Zeiträume hinweg ohne Ermüdungserscheinungen oder gesundheitliche Beeinträchtigung. Der Kippwinkel W1 kann dabei entweder fest vorgegeben oder vom Bediener frei wählbar beziehungsweise selbst einstellbar sein.

In Figur 5 ist gezeigt, dass die Sitzfläche 13 eine Breite B2 aufweisen kann. Die Breite B2 der Sitzfläche 13 wird insbesondere quer zur vorne/hinten-Richtung gemessen. In der Mitte der Breite B2 der Sitzfläche 13 liegt der Sitzindexpunkt SIP des Fahrersitzes 12. Dieser ist nach DIN EN ISO 5353 zu bestimmen. Im Zentrum des Steuerrades 19 wiederum liegt der Schnittpunkt S zwischen der Radebene 21 und der Steuerachse 20. Der ebenfalls angegebene Abstand A zwischen dem Schnittpunkt S und der Sitzfläche 13 wird bevorzugt ebenfalls quer zur vorne/hinten-Richtung gemessen. Der Abstand A beträgt bevorzugt wenigstens 15% der Breite B2 der Sitzfläche 13. Der Abstand A1 zwischen dem Schnittpunkt S und der Mitte der Breite B2 der Sitzfläche 13 beziehungsweise dem Sitzindexpunkt SIP wird ebenfalls bevorzugt quer zur vorne/hinten-Richtung gemessen. Der Abstand A1 beträgt bevorzugt wenigstens 30 cm. Der Durchmesser B1 des Steuerrades 19 wiederum entspricht bevorzugt im Wesentlichen der Breite B3 der Armauflagefläche 16. Auch diese Breite B3 wird insbesondere quer zur vorne/hinten-Richtung gemessen. All dies stellt sicher, dass der Bediener das Steuerrad 19 bequem mit auf der Armauflagefläche 10 aufliegendem Arm erreichen und nutzen kann.

Hierzu dient ebenfalls die Anordnung des Steuerrades 19 in Vertikalrichtung, sprich, entlang der Vertikalen V. Dies wird in Figur 6 dargestellt. Die Höhe der Armauflagefläche 16 in Vertikalrichtung ist in Figur 6 durch die untere der beiden eingezeichneten Horizontalebenen H dargestellt. Die Höhe der Armauflagefläche 16 in Vertikalrichtung beschreibt insbesondere die vertikale Höhe des untersten Punktes eines auf der Armauflagefläche 16 aufliegenden Armes des Bedieners. Die obere der beiden eingezeichneten Horizontalebenen H verläuft dagegen durch den Schnittpunkt S zwischen der Radebene 21 und der Steuerachse 20. Es ist nun bevorzugt vorgesehen, dass der vertikale Abstand B4 zwischen der Armauflagefläche 16 und dem Schnittpunkt S im Bereich weniger Zentimeter liegt. Auch dies sichert eine ergonomische Handhabung des Steuerrades 19 durch den Bediener.

In Figur 5 ist ebenfalls eine Maßnahme gezeigt, die dem Bediener möglichst große Bewegungsfreiheit, beispielsweise Beinfreiheit, sichert. Konkret kann an der Armlehne 15, insbesondere im Lagerbereich 30, eine Seitenausnehmung 26 vorgesehen sein. Die Seitenausnehmung 26 ist bevorzugt an der der Sitzfläche 13 zugewandten Innenseite der Armlehne 15 angeordnet, so dass diese an dieser Stelle zurückspringt und zusätzlichen Raum für den Bediener zur Verfügung stellt. Die Seitenausnehmung 26 ist dabei derart ausgebildet, dass sie sich quer zur vorne/hinten-Richtung bis zum Schnittpunkt S der Steuerachse 20 mit der Radebene 21 erstreckt. In vorne/hinten-Richtung erstreckt sich die Seitenausnehmung 26 bevorzugt bis über eine Vorderkante 23 der Sitzfläche 13 hinaus. Die Vorderkante 23 bezeichnet das vorne liegende Ende der Sitzfläche 13. Die Seitenausnehmung 26 durchdringt die Armlehne 15 bevorzugt in Vertikalrichtung vollständig, sodass diese sowohl nach unten als auch nach oben geöffnet ausgebildet ist. Auf diese Weise wirkt die Seitenausnehmung 26 vorteilhaft mit einem Freiraum 31 zusammen, der beispielsweise in Figur 6 dargestellt ist, und der insbesondere dadurch zustande kommt, dass der Steuerradträger 18, sprich, der Anteil der Armlehne 15 im Lagerbereich 30, schräg nach vorne und oben verläuft. Auf diese Weise wird in Vertikalrichtung unter dem Steuerradträger 18 bevorzugt der Freiraum 31 geschaffen, der ebenfalls die Beinfreiheit des Bedieners erhöht. Besonders bevorzugt ist nun, dass die Seitenausnehmung 26 und der Freiraum 31 einen zusammenhängenden Freiraum bilden. Mit anderen Worten gehen die Seitenausnehmung 26 und der Freiraum 31 hindernisfrei ineinander über und stellen so insgesamt einen Freiraum dar, der vom Bediener beispielsweise bei bestimmten Beinbewegungen genutzt werden kann und als angenehm empfunden wird.

Wie in Figur 7 gezeigt, kann neben der Neigung des Steuerrades 19 um den Kippwinkel W1 ebenfalls eine weitere Neigung um den Neigungswinkel W2 vorgesehen sein. Der Neigungswinkel W2 ist senkrecht zum Kippwinkel W1 angeordnet und beschreibt eine Neigung des Steuerrades 19 beziehungsweise der Radebene 21 und der Steuerachse 20 in Richtung auf die Sitzfläche 13 zu. Auch der Neigungswinkel W2 kann dabei entweder fest vorgegeben oder vom Bediener frei wählbar beziehungsweise selbst einstellbar sein.

Insgesamt ermöglicht die Erfindung ein intuitives, ergonomisches Bedienen des Steuerrades 19, welches langfristig bedient werden kann, ohne gesundheitliche Folgen für den Fahrer zu haben.

## Patentansprüche

1. Bedienarbeitsplatz (11) für eine Baumaschine (1), umfassend
- einen Fahrersitz (12) mit einer Sitzfläche (13),
- eine neben der Sitzfläche (13) angeordnete Armlehne (15) mit einer Armauflagefläche (16) und einem Steuerrad (19) zur Steuerung wenigstens einer Maschinenfunktion,
wobei das Steuerrad (19) um eine Steuerachse (20) drehbar ausgebildet ist,
**dadurch gekennzeichnet,**
**dass** das Steuerrad (19) in einer Horizontalebene quer zu einer vorne/hinten-Richtung von der Sitzfläche (13) beabstandet angeordnet ist, und dass die Steuerachse (20) des Steuerrads (19) gegenüber einer Vertikalen (V) um einen Kippwinkel (W1) in Richtung auf die Armauflagefläche (16) der Armlehne (15) zu verkippt angeordnet ist.

2. Bedienarbeitsplatz (11) nach Anspruch 1,
**dadurch gekennzeichnet,**
**dass** der Kippwinkel (W1) zwischen 20° und 70°, bevorzugt zwischen 30° und 60°, insbesondere zwischen 40° und 50°, beispielsweise 45°, beträgt.

3. Bedienarbeitsplatz (11) nach einem der vorhergehenden Ansprüche,
**dadurch gekennzeichnet,**
**dass** das Steuerrad (19) derart schwenkbar und in verschiedenen Schwenkpositionen arretierbar an der Armlehne (15) angeordnet ist, dass der Kippwinkel (W1) von einem Bediener frei wählbar ist, insbesondere in einem Bereich von 20° bis 70°.

4. Bedienarbeitsplatz (11) nach einem der vorhergehenden Ansprüche,
**dadurch gekennzeichnet,**
**dass** das Steuerrad (19) um einen senkrecht zum Kippwinkel (W1) orientierten Neigungswinkel (W2) gegenüber der Vertikalen (V) geneigt an der Armlehne (15) angeordnet ist, insbesondere in einem Bereich von bis zu 60°.

5. Bedienarbeitsplatz (11) nach dem vorhergehenden Anspruch,
**dadurch gekennzeichnet,**
**dass** das Steuerrad (19) derart schwenkbar und in verschiedenen Schwenkpositionen arretierbar an der Armlehne (15) angeordnet ist, dass der Neigungswinkel (W2) von einem Bediener frei wählbar ist, insbesondere in einem Bereich von 0° bis 60°, bevorzugt von 0° bis 45°.

6. Bedienarbeitsplatz (11) nach einem der vorhergehenden Ansprüche,
**dadurch gekennzeichnet,**
**dass** ein Schnittpunkt (S) einer Radebene (21) des Steuerrads (19) mit der Steuerachse (20) um wenigstens 15%, bevorzugt wenigstens 30% oder wenigstens 50%, einer Breite (B2) der Sitzfläche (13) von der Sitzfläche (13) und/oder um mindestens 20 cm, bevorzugt mindestens 25 cm oder mindestens 30 cm, von der Mitte der Breite (B2) der Sitzfläche (13) oder einem Sitzindexpunkt (SIP) des Fahrersitzes (12) entfernt angeordnet ist.

7. Bedienarbeitsplatz (11) nach einem der vorhergehenden Ansprüche,
**dadurch gekennzeichnet,**
**dass** ein Schnittpunkt (S) einer Radebene (21) des Steuerrads (19) mit der Steuerachse (20) in Vertikalrichtung in einem Bereich von +/- 3 cm, bevorzugt +/- 2 cm oder +/- 1 cm um die Höhe der Armauflagefläche (16) und insbesondere auf Höhe der Armauflagefläche (16) angeordnet ist.

8. Bedienarbeitsplatz (11) nach einem der vorhergehenden Ansprüche,
**dadurch gekennzeichnet,**
**dass** das Steuerrad (19) einen Durchmesser (B1) aufweist, der mit einer maximalen Abweichung von +/- 10%, und insbesondere genau, der Breite (B3) der Armauflagefläche (16) entspricht.

9. Bedienarbeitsplatz (11) nach einem der vorhergehenden Ansprüche,
**dadurch gekennzeichnet,**
**dass** die Armlehne (15) einen die Armauflagefläche (16) tragenden Armauflagebereich (28), einen das Steuerrad (19) tragenden Lagerbereich (30) und einen den Armauflagebereich (28) mit dem Lagerbereich (30) verbindenden Konsolenbereich (29) umfasst, wobei der Lagerbereich (30) sich schräg von der Armauflagefläche (16) weg und vertikal nach oben erstreckt und insbesondere parallel zu einer Radebene (21) des Steuerrads (19) angeordnet ist.

10. Bedienarbeitsplatz (11) nach einem der vorhergehenden Ansprüche,
**dadurch gekennzeichnet,**
**dass** die Armlehne (15) eine Seitenausnehmung (26) aufweist, in der die Armlehne (15) zwischen der Armauflagefläche (16) und dem Steuerrad (19) in der Horizontalebene in Richtung von der Sitzfläche (13) weg zurückspringend ausgebildet ist, wobei sich die Seitenausnehmung (26) in Richtung von der Armauflagefläche (16) weg insbesondere bis über eine Vorderkante (23) der Sitzfläche (13) hinaus erstreckt.

11. Bedienarbeitsplatz (11) nach einem der vorhergehenden Ansprüche,
**dadurch gekennzeichnet,**
**dass** das Steuerrad (19) eine Bedienhilfe in Form eines, insbesondere rotierbar am Steuerrad (19) angeordneten, Griffknaufs (22) und/oder einer am Steuerrad (19) angeordneten Ausnehmung (33) aufweist.

12. Bedienarbeitsplatz (11) nach einem der vorhergehenden Ansprüche,
**dadurch gekennzeichnet,**
**dass** zwischen dem Steuerrad (19) und der Armauflagefläche (16) eine Bedienkonsole (17) mit wenigstens einem Bedienelement (24) zur Steuerung wenigstens einer Maschinenfunktion an der Armlehne (15) angeordnet ist.

13. Baumaschine (1), insbesondere Bodenverdichtungsmaschine, beispielsweise Straßenwalze oder Walzenzug, oder Straßenfertiger, mit einem Bedienarbeitsplatz (11) gemäß den vorhergehenden Ansprüchen.

## Claims

1. An operator workplace (11) for a construction machine (1), comprising
- a driver seat (12) with a seating surface (13),
- an armrest (15) arranged next to the seating surface (13) and having an arm support surface (16) and a control wheel (19) for controlling at least one machine function,
the control wheel (19) being rotatable about a control axis (20),
**characterized in that**
the control wheel (19) is arranged at a distance from the seating surface (13) in a horizontal plane and transverse to a front/rear direction, and **in that** the control axis (20) of the control wheel (19) is tilted relative to a vertical line (V) by a tilt angle (W1) in a direction toward the arm support surface (16) of the armrest (15).

2. The operator workplace (11) according to claim 1,
**characterized in that**
the tilt angle (W1) is between 20° and 70°, preferably between 30° and 60°, in particular between 40° and 50°, for example 45°.

3. The operator workplace (11) according to any one of the preceding claims,
**characterized in that**
the control wheel (19) is arranged on the armrest (15) in a swiveling manner and arrestable in various swivel positions such that the tilt angle (W1) can be freely selected by an operator, in particular in a range from 20° to 70°.

4. The operator workplace (11) according to any one of the preceding claims,
**characterized in that**
the control wheel (19) is arranged on the armrest (15) inclined relative to the vertical line (V) by an inclination angle (W2) oriented perpendicular to the tilt angle (W1), in particular in a range of up to 60°.

5. The operator workplace (11) according to the preceding claim,
**characterized in that**
the control wheel (19) is arranged on the armrest (15) in a swiveling manner and arrestable in various swivel positions such that the inclination angle (W2) can be freely selected by an operator, in particular in a range from 0° to 60°, preferably from 0° to 45°.

6. The operator workplace (11) according to any one of the preceding claims,
**characterized in that**
a point of intersection (S) of a wheel plane (21) of the control wheel (19) with the control axis (20) is spaced apart by at least 15 %, preferably at least 30 % or at least 50 %, of a width (B2) of the seating surface (13) from the seating surface (13) and/or is spaced apart by at least 20 cm, preferably at least 25 cm or at least 30 cm, from the center of the width (B2) of the seating surface (13) or a seat index point (SIP) of the driver seat (12).

7. The operator workplace (11) according to any one of the preceding claims,
**characterized in that**
a point of intersection (S) of a wheel plane (21) of the control wheel (19) with the control axis (20) is arranged in a vertical direction in a range of +/- 3 cm, preferably +/- 2 cm or +/- 1 cm, around the height of the arm support surface (16), and in particular at the height of the arm support surface (16).

8. The operator workplace (11) according to any one of the preceding claims,
**characterized in that**
the control wheel (19) has a diameter (B1) which corresponds, with a maximum deviation of +/- 10 %, and in particular exactly, to the width (B3) of the arm support surface (16).

9. The operator workplace (11) according to any one of the preceding claims,
**characterized in that**
the armrest (15) comprises an arm support region (28) supporting the arm support surface (16), a mounting region (30) supporting the control wheel (19), and a console region (29) connecting the arm support region (28) to the mounting region (30), the mounting region (30) extending obliquely away from the arm support surface (16) and vertically upward and being arranged in particular parallel to a wheel plane (21) of the control wheel (19).

10. The operator workplace (11) according to any one of the preceding claims,
**characterized in that**
the armrest (15) has a side recess (26) in which the armrest (15) recedes between the arm support surface (16) and the control wheel (19) in the horizontal plane in a direction away from the seating surface (13), the side recess (26) extending in a direction away from the arm support surface (16), in particular beyond a front edge (23) of the seating surface (13).

11. The operator workplace (11) according to any one of the preceding claims,
**characterized in that**
the control wheel (19) has an operating aid in the form of a handle knob (22) arranged in particular rotatably on the control wheel (19), and/or a recess (33) arranged on the control wheel (19).

12. The operator workplace (11) according to any one of the preceding claims,
**characterized in that**
an operating console (17) with at least one operating element (24) for controlling at least one machine function is arranged on the armrest (15) between the control wheel (19) and the arm support surface (16).

13. A construction machine (1), in particular a ground compaction machine, for example a road roller or single-drum roller, or a road finisher, having an operator workplace (11) according to the preceding claims.

## Revendications

1. Poste de travail de manoeuvre (11) pour un engin de chantier (1), comprenant
- un siège conducteur (12) comportant une surface de siège (13),
- un accoudoir (15) disposé près de la surface de siège (13) et comportant une surface d'appui pour bras (16) et un volant de commande (19) pour la commande d'au moins une fonction d'engin,
dans lequel le volant de commande (19) est réalisé de manière à pouvoir pivoter autour d'un axe de commande (20),
**caractérisé en ce**
**que** le volant de commande (19) est disposé de manière à être espacé de la surface de siège (13) dans un plan horizontal transversal à une direction avant/arrière, **et en ce que** l'axe de commande (20) du volant de commande (19) est disposé de manière à être basculé par rapport à une verticale (V) selon un angle de basculement (W1) en direction de la surface d'appui pour bras (16) de l'accoudoir (15).

2. Poste de travail de manoeuvre (11) selon la revendication 1,
**caractérisé en ce**
**que** l'angle de basculement (W1) est compris entre 20° et 70°, de préférence entre 30° et 60°, en particulier entre 40° et 50°, est par exemple de 45°.

3. Poste de travail de manoeuvre (11) selon l'une des revendications précédentes,
**caractérisé en ce**
**que** le volant de commande (19) est disposé sur l'accoudoir (15) de manière à pouvoir pivoter et être verrouillé dans différentes positions de pivotement, de telle sorte que l'angle de basculement (W1) peut être choisi librement par un opérateur, en particulier dans une plage allant de 20° à 70°.

4. Poste de travail de manoeuvre (11) selon l'une des revendications précédentes,
**caractérisé en ce**
**que** le volant de commande (19) est disposé sur l'accoudoir (15) de manière inclinée par rapport à la verticale (V) selon un angle d'inclinaison (W2) orienté perpendiculairement à l'angle de basculement (W1), en particulier dans une plage allant jusqu'à 60°.

5. Poste de travail de manoeuvre (11) selon la revendication précédente,
**caractérisé en ce**
**que** le volant de commande (19) est disposé sur l'accoudoir (15) de manière à pouvoir pivoter et être verrouillé dans différentes positions de pivotement, de telle sorte que l'angle d'inclinaison (W2) peut être choisi librement par un opérateur, en particulier dans une plage allant de 0° à 60°, de préférence de 0° à 45°.

6. Poste de travail de manoeuvre (11) selon l'une des revendications précédentes,
**caractérisé en ce**
**qu**'un point d'intersection (S) d'un plan de volant (21) du volant de commande (19) comportant l'axe de commande (20) est disposé à une distance d'au moins 15 %, de préférence d'au moins 30 % ou d'au moins 50 %, d'une largeur (B2) de la surface de siège (13) par rapport à la surface de siège (13) et/ou à une distance d'au moins 20 cm, de préférence d'au moins 25 cm ou d'au moins 30 cm, par rapport au centre de la largeur (B2) de la surface de siège (13) ou à un point de repère de siège (SIP) du siège conducteur (12).

7. Poste de travail de manoeuvre (11) selon l'une des revendications précédentes,
**caractérisé en ce**
**qu**'un point d'intersection (S) d'un plan de volant (21) du volant de commande (19) comportant l'axe de commande (20) est disposé dans la direction verticale dans une plage de +/- 3 cm, de préférence de +/- 2 cm ou de +/- 1 cm, par rapport à la hauteur de la surface d'appui pour bras (16) et en particulier à la hauteur de la surface d'appui pour bras (16).

8. Poste de travail de manoeuvre (11) selon l'une des revendications précédentes,
**caractérisé en ce**
**que** le volant de commande (19) présente un diamètre (B1) qui correspond à un écart maximal de +/- 10 % à la largeur (B3) de la surface d'appui pour bras (16), et en particulier qui correspond exactement à la largeur de la surface d'appui pour bras.

9. Poste de travail de manoeuvre (11) selon l'une des revendications précédentes,
**caractérisé en ce**
**que** l'accoudoir (15) comprend une zone d'appui pour bras (28) supportant la surface d'appui pour bras (16), une zone de soutien (30) supportant le volant de commande (19) et une zone formant console (29) reliant la zone d'appui pour bras (28) à la zone de soutien (30), dans lequel la zone de soutien (30) s'étend en oblique à partir de la surface d'appui pour bras (16) et verticalement vers le haut, et en particulier parallèlement à un plan de volant (21) du volant de commande (19).

10. Poste de travail de manoeuvre (11) selon l'une des revendications précédentes,
**caractérisé en ce**
**que** l'accoudoir (15) présente un évidement latéral (26) dans lequel l'accoudoir (15) est réalisé en retrait entre la surface d'appui pour bras (16) et le volant de commande (19) dans le plan horizontal en direction de la surface de siège (13), dans lequel l'évidement latéral (26) s'étend dans une direction à partir de la surface d'appui pour bras (16), en particulier jusqu'au-delà d'un bord avant (23) de la surface de siège (13).

11. Poste de travail de manoeuvre (11) selon l'une des revendications précédentes,
**caractérisé en ce**
**que** le volant de commande (19) présente un moyen d'aide à la manoeuvre sous la forme d'un pommeau de préhension (22), en particulier disposé de manière à pouvoir tourner sur le volant de commande (19), et/ou sous la forme d'un évidement (33) disposé sur le volant de commande (19).

12. Poste de travail de manoeuvre (11) selon l'une des revendications précédentes,
**caractérisé en ce**
**qu**'une console de manoeuvre (17) comportant au moins un élément de manoeuvre (24) pour la commande d'au moins une fonction d'engin est disposée sur l'accoudoir (15) entre le volant de commande (19) et la surface d'appui pour bras (16).

13. Engin de chantier (1), en particulier engin de compactage du sol, par exemple rouleau compresseur ou compacteur, ou finisseur, comportant un poste de travail de manoeuvre (11) selon les revendications précédentes.
